# EUROPEAN PATENT APPLICATION

(11) **EP 3 334 175 A1**
(43) Date of publication of application: **13.06.2018**
(21) Application number: 16877389.3
(22) Date of filing: 12.09.2016
(51) Int. Cl.: H04N 21/83

(54) **STREAMING MEDIA AND CAPTION INSTANT SYNCHRONIZATION DISPLAYING AND MATCHING PROCESSING METHOD, DEVICE AND SYSTEM**

(30) Priority: 22.12.2015 CN 201510970843
(71) Applicant: Youku Internet Technology (Beijing) Co., Ltd., Beijing 100029 (CN)
(72) Inventor: XU,Jing, Beijing 100029 (CN); LI, Meng, Beijing 100029 (CN); SUN, Jun, Beijing 100029 (CN); GU, Sibin, Beijing 100029 (CN); PAN, Baiyu, Beijing 100029 (CN); WANG, Ji, Beijing 100029 (CN)
(74) Representative: Weickmann & Weickmann PartmbB
(86) International application number: PCT/CN2016/098659
(87) International publication number: WO 2017/107578

(57) **Abstract**

The disclosure provides a method for instantly and synchronously displaying and matching the streaming media and subtitles, wherein the synchronously displaying method comprises: encoding the collected video-audio data in a streaming media, and sending the video-audio data to a live broadcast server; obtaining subtitle data corresponding to the obtained video-audio data, and sending the subtitle data to the live broadcast server; buffering the encoded video-audio data through the live broadcast server according to a preset delay time, forming a subtitle layer according to the subtitle data, buffering the subtitle layer, establishing a synchronously matching relationship between the subtitle layer and the video-audio data, and sending the subtitle layer and the video-audio data; mixing the received subtitle layer and video-audio data having synchronously matching relationship to form streaming media information, distributing the streaming media information to a network node for output, thereby ensuring the synchronous and instant display of video-audio data and the subtitle layer, enhancing the matching accuracy of the subtitle layer and the video-audio data.

## Description

### CROSS-REFERENCE TO RELATED APPLICATION

The present application is based upon and claims the benefit of a priority of Chinese Patent Application No. 201510970843.9, filed on December 22, 2015, the entire contents of which are incorporated herein by reference.

### TECHNICAL FIELD

The present disclosure relates to the technical field of streaming media live broadcast, and more particularly, to a method and device for instantly and synchronously displaying streaming media and subtitles, a method and device for synchronously matching streaming media and subtitles, and a system for instantly and synchronously displaying streaming media and subtitles.

### BACKGROUND

With the rapid promotion of the "Internet Plus" model, as well as the development of streaming media live broadcast, subtitle translation greatly reduces visual interference and improves the level of synchronization relative to simultaneous interpretation. Currently, in the field of global internet streaming media live broadcast, it is usual that the video is separately displayed while the subtitles are individually translated. As for the subtitles and video, it is thus impossible to really achieve synchronization of real-time sound, picture, and subtitles; besides, mobile terminal adaptation is impossible as a transparent layer for subtitle display is added into the video. Generally, the means of subtitle translation is backward and complicated.

For instance, Chinese patent publication no. CN102655606A discloses a method and system for adding real-time subtitles and sign language services to a live program based on P2P network, comprising the following steps:
1) Making corresponding real-time subtitles according to the TV live broadcast or the site of the program.
2) Making corresponding real-time sign language according to the TV live broadcast or the site of the program.
3) Obtaining a video stream of live network broadcast, and a stream of real-time subtitles and real-time sign language, and storing them in respective buffers.

Specific procedures for making the real-time subtitles of step 1) are as follows:
1) Subtitles are entered in real time by a stenographer according to the TV live broadcast or at the site of the program.
2) Entered subtitles are reviewed by the stenographer.
3) Synchronization information, mainly including timestamps, sequence numbers, and error offset, is added to the subtitles.
4) Processed subtitles are pushed to a subtitle server.

Specific procedures for making the real-time sign language of step 2) are as follows:
1) Program content is interpreted in real time by a sign language interpreter according to the TV live broadcast or at the site of the program.
2) Contents interpreted by the sign language interpreter are recorded in real time, and synchronization information, mainly including timestamps and error offset, is added to the sign language video.
3) Processed sign language video is pushed to a sign-language streaming media server.

The live network broadcast of step 3) is respectively synchronized with the subtitles and the sign language and is displayed. Specific procedures are as follows:
1) Obtaining the video stream of the live network broadcast, real-time subtitle stream and real-time sign language stream, and storing them to respective buffers;
2) Parsing the timestamps of the live video frames, the sign language frames, and the subtitles stored in the buffers;
3) Matching corresponding sign language video frame and subtitle respectively in the subtitle buffer and the sign language video buffer according to the timestamp of the live video frame; displaying the subtitles and the sign language video together with the live video if corresponding sign language video frame and subtitle exist; and displaying merely the live video if corresponding sign language video frame and subtitle do not exist.

Based on the technical solution of this prior art, it is impossible to realize synchronization of real-time sound, picture, and subtitles; even if the error offset is added, it is still impossible that the subtitles and sign language made via this solution are synchronously added to the right time axis of the live video.

In addition, existing subtitles of live network broadcast are evolved from the subtitle addition in the radio and television field; the subtitle addition is completed at a signal terminal via a hardware subtitle apparatus. As a result, real-time synchronization of subtitles and video-audio cannot be realized for internet subtitles.

How to provide a method, device and/or system for instantly displaying subtitles based on streaming media live broadcast so as to realize instant and synchronous display of video-audio and subtitles of streaming media live broadcast has become a technical problem to be solved in the art.

### SUMMARY

The present disclosure provides a method of instantly displaying subtitles based on streaming media live broadcast to address the technical problem mentioned above.

The present disclosure provides a method for instantly and synchronously displaying streaming media and subtitles, comprising: encoding the collected video-audio data in a streaming media, and sending the encoded video-audio data to a live broadcast server; obtaining subtitle data corresponding to the video-audio data, and sending the subtitle data to the live broadcast server; buffering the encoded video-audio data through the live broadcast server according to a preset delay time, forming a subtitle layer according to the subtitle data and buffering the subtitle layer, establishing a synchronously matching relationship between the subtitle layer and the video-audio data, and sending the subtitle layer and the video-audio data; mixing received subtitle layer and video-audio data having a synchronously matching relationship so as to form streaming media information, and sending the streaming media information to network nodes so as to output it.

Optionally, steps for establishing the synchronously matching relationship between the buffered subtitle layer and video-audio data are as follows:
forming a play time axis for the buffered video-audio data according to its play time point marker;
and establishing for the subtitle layer a subtitle time axis matching the play time axis of the video-audio data, or, establishing a start timestamp and an end timestamp for displaying the subtitle layer according to the play time axis; the start timestamp and the end timestamp for displaying the subtitle layer are collectively referred to as subtitle timestamps.

Optionally, steps for mixing the subtitle layer and the video-audio data having a synchronously matching relationship are as follows:
embedding the subtitle time axis of the subtitle layer into the play time axis of the video-audio data, or embedding the start timestamp and the end timestamp into the play time axis of the video-audio data; synthesizing the subtitle layer and the video-audio data.

Optionally, steps for establishing the synchronously matching relationship between the subtitle layer and the video-audio data are as follows:
correcting the subtitle layer having the synchronously matching relationship so as to form a new subtitle layer replacing the original subtitle layer; and
adjusting the play time axis or the subtitle time axis corresponding to the corrected content, or adjusting the caption timestamps, so that the new subtitle layer synchronously matches the video-audio data.

Optionally, steps for correcting the subtitle layer are as follows: inserting preset subtitles, skipping, correcting subtitles, or presenting subtitles with one click.

Optionally, the length of the play time axis is the sum of the time length of the video-audio data and the preset delay time.

Optionally, the step of obtaining the subtitle data corresponding to the video-audio data and sending the subtitle data to a live broadcast server includes correcting the obtained subtitle data corresponding to the video-audio data.

Optionally, the steps of buffering, through the live broadcast server, the encoded video-audio data according to the preset delay time are as follows: performing delayed buffering for each frame of the video-audio data, or performing delayed buffering for the start part of the video-audio data, or performing delayed buffering for the end part of the video-audio data, or delaying the video-audio data frame corresponding to a position for pre-modifying the subtitle or a position for pre-adjusting the video-audio data according to the position.

The present disclosure further provides a device for instantly and synchronously displaying the streaming media and the subtitles, comprising:
a video-audio collecting and encoding unit configured to encode collected video-audio data in the streaming media and send the data to a live broadcast server;
a subtitle obtaining unit configured to obtain subtitle data of the video-audio data so as to form a subtitle layer, and sending the subtitle layer to the live broadcast server;
a processing unit, wherein the live broadcast server buffers the encoded video-audio data according to the preset delay time, buffers the subtitle layer, establishes a synchronously matching relationship between the buffered subtitle layer and video-audio data, and sends the subtitle layer and the video-audio data;
and a mixing and encoding unit configured to receive the subtitle layer and the video-audio data having a synchronously matching relationship, mixing the subtitle layer and the video-audio data, and then distributing them to network nodes according to a predetermined transport protocol so as to output them.

Optionally, the processing unit comprises:
a play time axis forming unit configured to form a play time axis for the buffered video-audio data according to its play time point marker;
and a subtitle time axis forming unit or a subtitle timestamp forming unit, wherein: the subtitle time axis forming unit is configured to establish for the subtitle layer a subtitle time axis matching the play time axis of the video-audio data; the subtitle timestamp forming unit is configured to establish a start timestamp and an end timestamp for displaying the subtitle layer according to the play time axis; the start timestamp and the end timestamp for displaying the subtitle layer are collectively referred to as subtitle timestamps.

Optionally, the mixing and encoding unit comprises:
a synthesizing and embedding unit configured to embed the subtitle time axis of the subtitle layer into the play time axis of the video-audio data, or configured to embed the start timestamp and the end timestamp into the play time axis of the video-audio data, and synthesize the subtitle layer and the video-audio data.

Optionally, the processing unit comprises:
a subtitle-layer correcting unit configured to correct the subtitle layer having the synchronously matching relationship, so as to form a new subtitle layer replacing the original subtitle layer;
and an adjustment unit configured to adjust the play time axis or the subtitle time axis corresponding to the corrected content, or the subtitle timestamp, so that the new subtitle layer synchronously matches the video-audio data.

Optionally, the subtitle-layer correcting unit is configured to perform the following operations for the subtitle layer, including: inserting preset subtitles, skipping, correcting the subtitles, or presenting subtitles with one click, or the like.

Optionally, the subtitle obtaining unit comprises: a subtitle data correcting unit configured to correct the obtained subtitle data corresponding to the video-audio data.

Optionally, the processing unit comprises: a delayed-buffering unit configured to perform delayed buffering for each frame of the video-audio data, or perform delayed buffering for the start part of the video-audio data, or perform delayed buffering for the end part of the video-audio data, or delay the video-audio data frame corresponding to the position for pre-modifying the subtitle or the position for pre-adjusting the video-audio data according to the position.

The present disclosure further provides a processing method for synchronously matching streaming media and subtitles, including:
buffering the received encoded video-audio data according to a preset delay time;
forming a subtitle layer by using the received subtitle data corresponding to the video-audio data, and buffering the subtitle layer;
and establishing a synchronously matching relationship between the video-audio data and the subtitle layer, and sending the video-audio data and the subtitle layer.

Optionally, the step of establishing a synchronously matching relationship between the video-audio data and the subtitle layer comprises:
forming a play time axis for the buffered video-audio data according to its play time point marker;
and establishing for the subtitle layer a subtitle time axis matching the play time axis of the video-audio data, or establishing a start timestamp and an end timestamp for displaying the subtitle layer according to the play time axis; the start timestamp and the end timestamp for displaying the subtitle layer are collectively referred to as subtitle timestamps.

Optionally, the step of establishing a synchronously matching relationship between the subtitle layer and the video-audio data comprises:
correcting the subtitle layer having the synchronously matching relationship so as to form a new subtitle layer replacing the original subtitle layer;
and adjusting the play time axis or the subtitle time axis corresponding to the corrected content, or adjusting the subtitle timestamps, so that the new subtitle layer synchronously matches the video-audio data.

Optionally, the step of buffering the received encoded video-audio data according to a preset delay time includes:
performing delayed buffering for each frame of the video-audio data, or performing delayed buffering for the start part of the video-audio data, or performing delayed buffering for the end part of the video-audio data, or delaying the video-audio data frame corresponding to the position for pre-modifying the subtitle or the position for pre-adjusting the video-audio data according to the position.

The present disclosure further provides a processing device for synchronously matching the streaming media and subtitles, comprising:
a delayed-buffering unit configured to buffer the received encoded video-audio data according to a preset delay time;
a subtitle-layer forming unit configured to form a subtitle layer by using the received subtitle data corresponding to the video-audio data, and buffer the subtitle layer;
and a synchronously-matching relationship establishing unit configured to establish a synchronously matching relationship between the video-audio data and the subtitle layer, and sending the video-audio data and the subtitle layer.

Optionally, the synchronously-matching relationship establishing unit comprises:
a play time axis forming unit configured to form a play time axis for the buffered video-audio data according to its play time point marker;
and a subtitle time axis forming unit or a subtitle timestamp establishing unit, wherein: the subtitle time axis forming unit is configured to establish for the subtitle layer a subtitle time axis matching the play time axis of the video-audio data; the subtitle timestamp establishing unit is configured to establish a start timestamp and an end timestamp for displaying the subtitle layer according to the play time axis; the start timestamp and the end timestamp for displaying the subtitle layer are collectively referred to as subtitle timestamps.

Optionally, the synchronously-matching relationship establishing unit comprises:
a subtitle-layer correcting unit configured to correct the subtitle layer having the synchronously matching relationship, so as to form a new subtitle layer replacing the original subtitle layer;
and an adjustment unit configured to adjust the play time axis or the subtitle time axis corresponding to the corrected content, or the subtitle timestamps, so that the new subtitle layer synchronously matches the video-audio data.

Optionally, the delayed-buffering unit is configured to perform delayed buffering for each frame of the video-audio data, or perform delayed buffering for the start part of the video-audio data, or perform delayed buffering for the end part of the video-audio data, or delay the video-audio frame corresponding to the position for pre-modifying the subtitle or the position for pre-adjusting the video-audio data according to the position.

The present disclosure further provides a system for instantly and synchronously displaying the streaming media and subtitles, comprising:
a collecting and encoding apparatus configured to collect and encode video-audio data in a streaming media, and send the video-audio data to a live broadcast server according to a pre-determined video-audio transport protocol;
a subtitle obtaining apparatus configured to input subtitle data matching the video-audio data, and send the subtitle data to the live broadcast server according to a predetermined subtitle transport protocol;
a live broadcast service apparatus configured to buffer the encoded video-audio data according to a preset delay time, form a subtitle layer according to the subtitle data and buffer the subtitle layer, establish a synchronously matching relationship between the subtitle layer and the video-audio data, and send the subtitle layer and the video-audio data;
and a mixing and encoding apparatus configured to mix the received subtitle layer and video-audio data having a synchronously matching relationship so as to form streaming media information, and send the streaming media information to network nodes according to the predetermined transport protocol so as to output it.

Optionally, the mixing and encoding apparatus comprises:
a synthesizing processor configured to embed the subtitle time axis of the subtitle layer into the play time axis of the video-audio data, or embed the start timestamp and the end timestamp into the play time axis of the video-audio data; and configured to synthesize the subtitle layer and the video-audio data.

Optionally, the live broadcast service apparatus comprises:
a subtitle-layer corrector configured to correct the subtitle layer having the synchronously matching relationship, so as to form a new subtitle layer replacing the original subtitle layer; and configured to adjust the subtitle time axis or the play time axis corresponding to the corrected content, or to adjust the play time axis or the subtitle time axis corresponding to the corrected content, so that the new subtitle layer synchronously matches the video-audio data.

Optionally, the subtitle obtaining apparatus comprises: a subtitle data corrector configured to correct the obtained subtitle data corresponding to the video-audio data.

Afore-mentioned are a method, device, and system for instantly and synchronously displaying and matching the streaming media and subtitles, wherein the method of instantly and synchronously displaying the streaming media and subtitles includes the steps of sending the collected and encoded video-audio data to the live broadcast server, which buffers the collected and encoded video-audio data according to a preset delay time, obtaining subtitle data related to the video-audio data, and sending the subtitle data to the live broadcast server, wherein the live broadcast server forms the subtitle layer according to the subtitle data and buffers the subtitle layer, establishes a synchronously matching relationship between the subtitle layer and the video-audio data, and sends the subtitle layer and the video-audio data; mixing the received subtitle layer and video-audio data having the synchronously matching relationship so as to form streaming media information, distributing the streaming media information to network nodes so as to output it. As a result, since delayed buffering can be performed for the video-audio data obtained from the live broadcasts or the site of live events at home and abroad, and a synchronously matching relationship can be established between the video-audio data and the subtitle layer, the matching between the subtitles and the video-audio data can be effectively adjusted, the subtitle can be displayed on the video-audio pictures real-time and synchronously with the video-audio data, and can be synchronized with the video-audio; since a delay time of the video-audio is set, it is possible to correct the subtitle data and/or subtitle layer so that the matching of the subtitles and the video-audio data is more accurate, mistakes in subtitles are less, thereby ensuring that the synchronous display of video-audio and the subtitles is precise, and is free from geographical restrictions.

### BRIEF DESCRIPTION OF THE DRAWINGS

Fig. 1 is a flow chart of the method provided by the present disclosure for instantly and synchronously displaying streaming media and subtitles;
Fig. 2 is a structural diagram of the device provided by the present disclosure for instantly and synchronously displaying streaming media and subtitles;
Fig. 3 is a flow chart of the processing method provided by the present disclosure for synchronously matching streaming media and subtitles;
Fig. 4 is a structural diagram of the processing device provided by the present disclosure for synchronously matching streaming media and subtitles;
Fig. 5 is a diagram of the system provided by the present disclosure for instantly and synchronously displaying streaming media and subtitles;
Fig. 6 illustrates a structural block diagram of the apparatus provided in another embodiment of the present disclosure for instantly and synchronously displaying streaming media and subtitles;
Fig. 7 illustrates a structural block diagram of the processing apparatus provided in another embodiment of the present disclosure for synchronously matching streaming media and subtitles.

### DETAILED DESCRIPTION

Plenty of details are stated in the following description so that the present disclosure can be fully understood. However, the present disclosure can also be implemented in many other ways different from those set forth in the description, and one skilled in the art can apply the present disclosure broadly in a similar way without departing from the spirit of the present disclosure, so the present disclosure is not limited by the specific embodiments disclosed below.

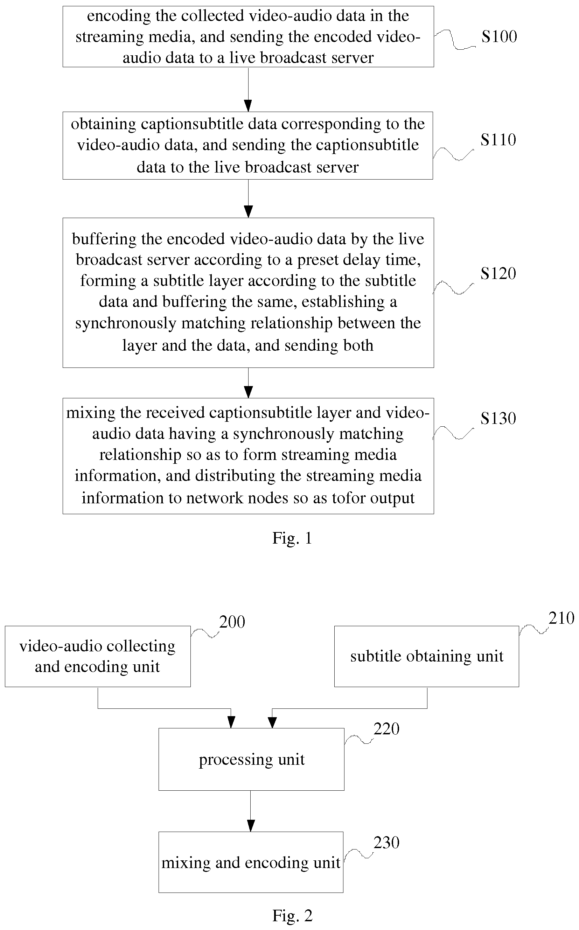

As shown in Fig. 1, Fig. 1 is a flow chart of the method provided by the present disclosure for instantly and synchronously displaying streaming media and subtitles.

The present disclosure mainly concerns displaying in real time a subtitle file that is synchronized with the video-audio file while broadcasting, with regard to the video-audio file collected from the site of the live broadcast, so that the subtitles and the video-audio file may be instantly and synchronously displayed on a display apparatus. Specific steps are as follows:
Step S100: encoding the collected video-audio data in the streaming media, and sending the encoded video-audio data to a live broadcast server.

In the foregoing step, the video-audio data in the streaming media can be a record of the video-audio from the live broadcast or the site of a live event so as to generate satellite and/or digital high-definition signals or the like, then an encoder is used for collecting the satellite and/or digital high-definition signals and encoding the collected signals, and the encoded signals are sent to a live broadcast server.

In this step, the video-audio data can be encoded by a third-party software such as Windows Media Encoder and so on.

Encoded video-audio data can be sent to the live broadcast server according to a predetermined transport protocol, wherein the predetermined transport protocol can be RTMP (Real Time Messaging Protocol). The transport protocol may include the basic protocol of RTMP and many variations such as RTMPT/RTMPS/RTMPE and so on.

It should be noted that the live broadcast or the site of the live event herein is free from geographical restrictions, and that the signals collected from the live broadcast or the site of the live event are also free from restrictions on input signal sources.

Step S110: obtaining subtitle data corresponding to the video-audio data, and sending the subtitle data to the live broadcast server.

In this step, the subtitle data of the video-audio data can be a synchronous voiced translation, via simultaneous interpretation, of the video-audio in the live broadcast or at the site of the live event, and is entered by a stenographer into a subtitle management system, then is sent to the live broadcast server.

The subtitle data here can also be transmitted according to the same transport protocol as that for the video-audio data.

In order to make the subtitle entry more accurate, the obtained subtitle data corresponding to the video-audio data can also be corrected in this implementation, thereby correcting such man-made mistakes as misspellings or the like, and making the subtitle data more accurate.

Step S120: buffering the encoded video-audio data by the live broadcast server according to a preset delay time, forming a subtitle layer according to the subtitle data and buffering the subtitle layer, establishing a synchronously matching relationship between the subtitle layer and the video-audio data, and thereafter sending both the subtitle layer and the video-audio data.

In this step, the live broadcast server buffers the encoded video-audio data according to a preset delay time. Specifically, the video-audio data can be buffered in a storage space in the live broadcast server, and the preset delay time can be set to be 30-90 seconds based on needs, depending on the size of the storage space. In this implementation, the video-audio data can be stored so as to perform delay-time processing for each frame, or delay-time processing for the start part of the video-audio data, or delay-time processing for the end part of the video-audio data and so on. For instance, a delayed buffering of 30 seconds can be performed in the server for each frame of the video-audio data; or a delay of 30 seconds can be performed for the picture of 25 frames if 25 frames of the video-audio data are displayed per second, i.e., 25 frames/second*30 seconds, wherein 30 seconds is the delayed time. Thus, the subtitle data can be processed after being received, and a synchronously matching relationship can be established between the subtitle data and the video-audio data, wherein the synchronously matching relationship can be presenting, when the video-audio data is displayed, the subtitle layer at a position of the video-audio where subtitles are needed.

It can be understood that, the preset delay time in this embodiment can be set to be 30-90 seconds. The delay time can be set according to the storage amount in the live broadcast server of streaming media. The above-mentioned display method is merely one of the preferred implementation, and is not intended for restricting the setting of the delay time in this disclosure. The delay of video-audio data can make the synchronization between subtitles and video-audio data more accurate.

It should be noted that, corresponding to the delay of video-audio data, the live broadcast server in this implementation can also perform delay-time processing for the subtitle data after receiving the subtitle data, which facilitates establishing the synchronously matching relationship between the subtitle layer and the video-audio data.

In this step, there can be numerous specific methods for establishing the synchronously matching relationship between the subtitle layer and the video-audio data. The following two methods for establishing the synchronously matching relationship will be explained in the present disclosure.

The first implementation: forming a play time axis for the buffered video-audio data according to its play time marker, and establishing for the subtitle layer a subtitle time axis matching the play time axis of the video-audio data;

The second implementation: forming a play time axis for the buffered video-audio data according to its play time marker, and establishing, on the play time axis, timestamps for triggering the display of the subtitle layer.

Description has been made with the above two implementations on the synchronously matching relationship established between the video-audio data and the subtitle layer, which may actually be realized by establishing the display time of the subtitle layer on the basis of the play time of the video-audio, thus the synchronously matching relationship established between the video-audio data and the subtitle layer can be achieved. It can be understood that establishing the synchronously matching relationship between the video-audio data and the subtitle layer is not limited by the above two ways; it can also be realized by marking the video-audio data frames. For instance, an identifier can be added at a position in a frame picture of the video-audio data for displaying the subtitle layer, and a subtitle-layer display identifier, which is the same as the video-audio identifier, is provided on the subtitle layer. The synchronously matching relationship therebetween can be realized via the video-audio identifier and the subtitle-layer marker.

The methods of establishing the synchronously matching relationship between the video-audio data and the subtitle layer are not limited to the above-mentioned content; the above contents are merely illustrative examples for establishing the synchronously matching relationship between both the video-audio data and the subtitle layer.

It should be noted that the length of the play time axis in the above two methods may be a sum of the time length of the video-audio data and the length of the preset delay time.

In this step, in order to ensure the accuracy of the subtitle layer, after the synchronously matching relationship is established between the subtitle layer and the video-audio data, the subtitle layer having the synchronously matching relationship can be corrected, and a new subtitle layer can be formed and replace the original subtitle layer; then the play time axis or the subtitle time axis corresponding to the corrected content, or the subtitle timestamps will be adjusted so that the new subtitle layer matches the video-audio data.

It can be understood that the subtitle time axis here may be adjusted merely by covering the position of the subtitle to be corrected with a transparent layer. For instance, if a subtitle, the lasting time of which is 3 seconds, is deleted during subtitle layer correction, it would be 75 frames missing correspondingly from the video-audio play time axis, so the position of 75 video-audio data frames can be covered by establishing a transparent covering layer, thereby achieving the adjustment to the play time axis.

The correction of the subtitle layer may include the following operations: inserting preset subtitles, skipping subtitles, correcting subtitles, or presenting subtitles with one click, and so on. For instance, specific titles or particular terms can be skipped by artificially deploying the time code embodied by the subtitle to perform the correction. The function of presenting subtitles with one click can be used for politically sensitive words, which are skipped via the control over the video-audio play time axis, and operations of updating and on-screen display are performed directly. Thus, the content displayed on the subtitle layer may be more accurate, sensitive words may be avoided, and live broadcasting videos may be more secure.

It should be noted here that, after the synchronously matching relationship is established between the video-audio data and the subtitle layer, the subtitle layer correction can be realized in the live broadcast server, or in a way as follows: firstly sending the matched subtitle layer via the live broadcast server, sending the corrected subtitle layer back to the live broadcast server, adjusting the received subtitle layer via the live broadcast server so that the corrected subtitle layer synchronously matches the video-audio data, and then sending the corrected subtitle layer for mixing processing. Therefore, the subtitle layer correction in the present disclosure can be accomplished in the live broadcast server and/or out of the live broadcast server.

Step S130: mixing the received subtitle layer and video-audio data having a synchronously matching relationship so as to form streaming media information, and distributing the streaming media information to network nodes for output.

In this step, based on the synchronously matching relationship established in the first and second implementations of step S120, the video-audio data and the subtitle layer can be mixed in the following way.

On the basis of the synchronously matching relationship established via the play time axis and the subtitle time axis, the subtitle time axis of the subtitle layer can be embedded into the play time axis of the video-audio data. One specific implementation can be synthesizing the time scale of the subtitle time axis and that of the video-audio data play time axis, thereby realizing mixing. For instance, following a play time axis established according to the play time of the video-audio, assume that a subtitle lasting for 2 seconds begins to appear at the 10^{th} second from the appearance of the video, and that a subtitle time axis of 2 seconds is established at the 11^{th} second when the video is played, then mixing and matching mean that, if the video-audio begins to play at a rate of 25 frames/second, the subtitle time axis is added into the play time axis at the timing of the 251^{st} frame, i.e., the 11^{th} second, then the subtitle time axis stops and the subtitle layer disappears when the video-audio data is played to the 300^{th} frame, and so on. Thus, the video-audio data and the subtitle layer are synchronously mixed, and the video-audio data is distributed to each network node for output after the mixture.

As for the way of establishing a start timestamp and an end timestamp for displaying the subtitle layer which match the play time axis as described above, it is mainly based on the play time axis of the video-audio data, and a timestamp for displaying the subtitle layer is added at the time point when the subtitle layer is displayed. When the video-audio data is played to this time point, the timestamp will be triggered, thus the subtitle layer will be displayed. For instance, assume that a subtitle lasting for 2 seconds will appear at the 10^{th} second of the video, a timestamp for displaying the subtitle layer will be added at the 11^{th} second of the video, and a timestamp for stopping the subtitle is added at the 13^{th} second of the video; as for mixing, assume that the video-audio begins to be played at a rate of 25 frames/second, then the timestamp for displaying the subtitle layer will be automatically triggered by the play time axis at the 251^{st} frame, i.e., the 11^{th} second, and the subtitle layer will be displayed on the video; then the timestamp for stopping the subtitle layer will be automatically triggered by the play time axis when the video-audio data is played to the 300^{th} frame, i.e., the 13^{th} second, and the subtitle layer will disappear, and so on. In this way, the video-audio data and the subtitle layer are mixed.

If an identifier is added at the frame picture position of the video-audio data at which the subtitle layer is displayed, and a subtitle-layer display marker that is the same as the video-audio identifier is provided on the subtitle layer, then the mixing of the video-audio data and the subtitle layer means to overlap their respective markers when a synchronously matching relationship between them is realized via the video-audio identifier and the subtitle-layer marker, thereby when the video-audio data is played on a display apparatus and the marker appears, the subtitle layer will be displayed at a position of the video-audio data for displaying the subtitle layer, achieving the instant and synchronous display of the video-audio data and the subtitle layer.

It should be noted that, as for the above-mentioned way for mixing the video-audio data and the subtitle layer, the subtitle layer and the video-audio data can be matched automatically by the system, or can be matched and mixed with manual intervention, wherein the manual intervention can be for example manually adding the subtitle layer at a position where the subtitle layer needs to be displayed.

The above process of mixing can be realized through an encoder. The live broadcast server sends the video-audio data and the subtitle layer having an established synchronously matching relationship to the mixing encoder, which can mix them and finally transmit them.

It can be understood that the mixed video-audio data and subtitle layer in this step can be transmitted according to a network transport protocol (e.g., http protocol), and displayed on a display apparatus.

According to the above-mentioned content, the present disclosure provides a method for instantly and synchronously displaying streaming media and subtitles, including steps of: sending collected and encoded video-audio data to a live broadcast server, wherein the live broadcast server buffers the received video-audio data according to a preset delay time, forms a subtitle layer according to the obtained subtitle data related to the video-audio data, establishes a synchronously matching relationship between the video-audio data and the subtitle layer, sends the video-audio data and the subtitle layer, mixes the video-audio data and the subtitle layer having a synchronously matching relationship, and distributes them through network nodes; finally, the video-audio data and the subtitle layer are instantly and synchronously displayed on a display apparatus. Thus, for live broadcasts or the site of live events at home and abroad, since the obtained video-audio data and subtitle data are buffered, the matching of subtitles and video-audio data can be effectively adjusted, and subtitles can thus be displayed on video-audio pictures in real time; moreover, since a length of the delay time is set, it is possible that the matching of subtitles and video-audio data is more accurate and mistakes in subtitles are fewer, thereby ensuring that the video-audio and subtitles are synchronously displayed, and that the subtitle display is free from geographical restrictions.

In addition, the method provided by the present disclosure for synchronously displaying streaming media and subtitles may also make the display of the subtitle layer more accurate via the correction of the subtitle layer, may realize more precise matching between the subtitles and the video-audio pictures by adjusting the subtitle-layer time axis or timestamps after the subtitle-layer correction, thereby further enhancing synchronization precision, and may further enhance matching precision and synchronous output precision by means of manual intervention, thereby ensuring the accuracy and real-time performance of the subtitle layer.

Above is the description of the method provided by the present disclosure for instantly and synchronously displaying streaming media and subtitles. The present disclosure further provides a device for instantly and synchronously displaying streaming media and subtitles. Referring to Fig. 2, it is a structural diagram of the device provided by the present disclosure for instantly and synchronously displaying streaming media and subtitles. Since the device embodiments are similar to the method ones, the description is comparatively simple. For details, please refer to the corresponding portion in the method embodiments. The following device embodiments are merely schematic.

As shown in Fig. 2, the device specifically comprises:
A video-audio collecting and encoding unit 200 configured to encode the collected video-audio data in streaming media and send the encoded data to a live broadcast server.

A subtitle obtaining unit 210 configured to obtain subtitle data of the video-audio data so as to form a subtitle layer, and send the subtitle layer to the live broadcast server. The subtitle obtaining unit 210 comprises: a subtitle data correcting unit configured to correct the obtained subtitle data corresponding to the video-audio data.

A processing unit 220, wherein the live broadcast server buffers the encoded video-audio data according to the preset delay time, buffers the subtitle layer, establishes a synchronously matching relationship between the subtitle layer and the video-audio data, and sends the subtitle layer and the video-audio data.

The processing unit 220 comprises:
A delayed-buffering unit configured to perform delayed buffering for each frame of the video-audio data, or perform delayed buffering for the start part of the video-audio data, or perform delayed buffering for the end part of the video-audio data, or delay the video-audio data frame corresponding to the position for pre-modifying the subtitle or the position for pre-adjusting the video-audio data according to the position.

A play time axis forming unit configured to form a play time axis for the buffered video-audio data according to its play time point marker.

A subtitle time axis forming unit or a subtitle timestamp forming unit, wherein: the subtitle time axis forming unit is configured to establish for the subtitle layer a subtitle time axis matching the play time axis of the video-audio data; the subtitle timestamp forming unit is configured to establish a start timestamp and an end timestamp for displaying the subtitle layer according to the play time axis; the start timestamp and the end timestamp for displaying the subtitle layer are collectively referred to as subtitle timestamps.

A subtitle-layer correcting unit configured to correct the subtitle layer having the synchronously matching relationship, so as to form a new subtitle layer replacing the original subtitle layer. The subtitle-layer correcting unit is configured to perform the following operations for the subtitle layer, including: inserting preset subtitles, skipping, correcting the subtitles, or presenting subtitles with one click, and so on.

An adjustment unit configured to adjust the play time axis or the subtitle time axis corresponding to the corrected content, or the subtitle timestamps, so that the new subtitle layer synchronously matches the video-audio data.

A mixing and encoding unit 230 configured to receive the subtitle layer and the video-audio data having a synchronously matching relationship, mix the subtitle layer and the video-audio data, and then distribute them to a network node according to a predetermined transport protocol so as to output them.

The mixing and encoding unit 230 comprises: a synthesizing and embedding unit configured to embed the subtitle time axis of the subtitle layer into the play time axis of the video-audio data, or is configured to embed the start timestamp and the end timestamp into the play time axis of the video-audio data, and synthesize the subtitle layer and the video-audio data.

Above is an illustration of the device provided by the present disclosure for instantly and synchronously displaying streaming media and subtitles. Since the device embodiments are basically similar to the method ones, the description here is merely schematic, and the details are omitted.

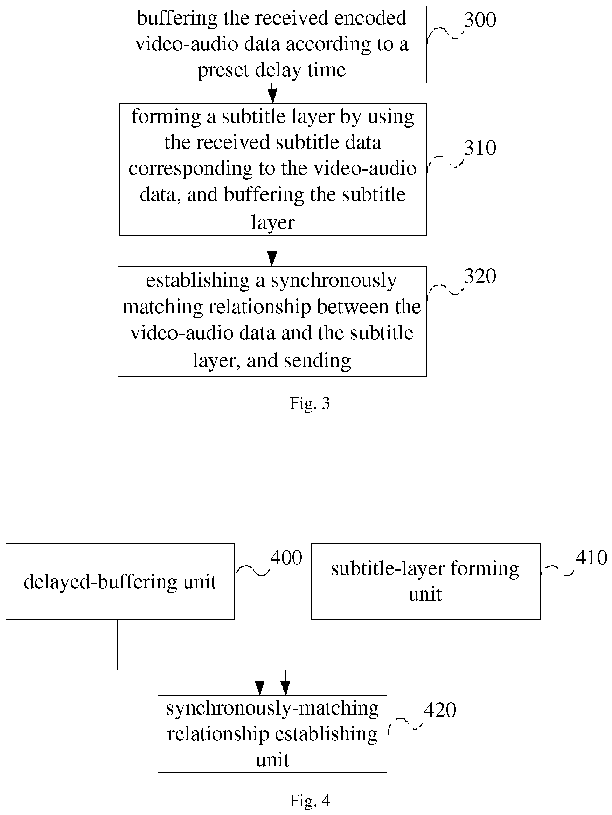

Based on the above content, the present disclosure further provides a processing method for synchronously matching streaming media and subtitles. As shown in Fig. 3, Fig. 3 is a flow chart for the processing method provided by the present disclosure for synchronously matching streaming media and subtitles. Since the processing method for synchronously matching streaming media and subtitles is specifically described in the method provided by the present disclosure for instantly and synchronously displaying streaming media and subtitles, the description here is merely schematic. For details, please refer to Fig. 1 and related explanation.

The method including the following steps:
Step S300: buffering the received encoded video-audio data according to a preset delay time.

The step S300 includes: performing delayed buffering for each frame of the video-audio data, or performing delayed buffering for the start part of the video-audio data, or performing delayed buffering for the end part of the video-audio data, or delaying the video-audio data frame corresponding to the position for pre-modifying the subtitle or the position for pre-adjusting the video-audio data according to the position.

Step S310: forming a subtitle layer by using the received subtitle data corresponding to the video-audio data, and buffering the subtitle layer.

Step S320: establishing a synchronously matching relationship between the video-audio data and the subtitle layer, and sending the video-audio data and the subtitle layer. The step S320 includes:
forming a play time axis by using the buffered video-audio data according to its play time point marker;
establishing for the subtitle layer a subtitle time axis matching the play time axis of the video-audio data, or establishing a start timestamp and an end timestamp for displaying the subtitle layer according to the play time axis; the start timestamp and the end timestamp for displaying the subtitle layer are collectively referred to as subtitle timestamps;
correcting the subtitle layer having the synchronously matching relationship so as to form a new subtitle layer replacing the original subtitle layer;
adjusting the play time axis or the subtitle time axis corresponding to the corrected content, or adjusting the subtitle timestamps so that the new subtitle layer synchronously matches the video-audio data.

Based on the above processing method provided for synchronously matching streaming media and subtitles, the present disclosure further provides a processing device. Since device embodiments are basically similar to method embodiments, the description here is comparatively simple. For relevant contents, please refer to the explanation for the method embodiments, and the device embodiments described below are merely schematic.

As shown in Fig. 4, Fig. 4 is a structural diagram of the processing device provided by the present disclosure for synchronously matching streaming media and subtitles.

The device comprises:
A delayed-buffering unit 400 configured to buffer the received encoded video-audio data according to a preset delay time. The delayed-buffering unit 400 is configured to perform delayed buffering for each frame of the video-audio data, or perform delayed buffering for the start part of the video-audio data, or perform delayed buffering for the end part of the video-audio data, or delay the video-audio frame corresponding to the position for pre-modifying the subtitle or the position for pre-adjusting the video-audio data according to the position.

A subtitle-layer forming unit 410 configured to form a subtitle layer by using the received subtitle data corresponding to the video-audio data, and buffer the subtitle layer.

A synchronously-matching relationship establishing unit 420 configured to establish a synchronously matching relationship between the video-audio data and the subtitle layer, and send the video-audio data and the subtitle layer.

The synchronously-matching relationship establishing unit 420 comprises: a play time axis forming unit configured to form a play time axis for the buffered video-audio data according to its play time point marker.

A subtitle time axis forming unit or a subtitle timestamp establishing unit, wherein: the subtitle time axis forming unit is configured to establish for the subtitle layer a subtitle time axis matching the play time axis of the video-audio data; the subtitle timestamp establishing unit is configured to establish a start timestamp and an end timestamp for displaying the subtitle layer according to the play time axis; the start timestamp and the end timestamp for displaying the subtitle layer are collectively referred to as subtitle timestamps.

A subtitle-layer correcting unit configured to correct the subtitle layer having the synchronously matching relationship, so as to form a new subtitle layer replacing the original subtitle layer;

And an adjustment unit configured to adjust the play time axis or the subtitle time axis corresponding to the corrected content, or the subtitle timestamp, so that the new subtitle layer synchronously matches the video-audio data.

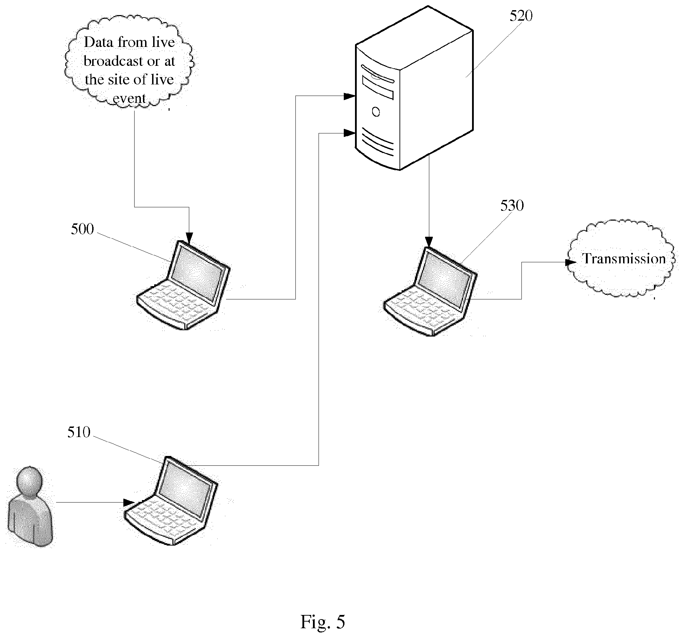

Based on Figs. 1-4, the present disclosure further provides a system for instantly and synchronously displaying the streaming media and subtitles. Fig. 5 is a diagram of the system provided by the present disclosure for instantly and synchronously displaying streaming media and subtitles. Since system embodiments are basically similar to method embodiments, the description here is comparatively simple. For relevant contents, please refer to the explanation for the method embodiments, and the system embodiments described below are merely schematic.

The system specifically comprises:
A collecting and encoding apparatus 500 configured to collect and encode video-audio data in streaming media, and send the video-audio data to a live broadcast server; the apparatus is mainly capable of collecting video-audio data in live events or other live video-audio data and so on.

A subtitle obtaining apparatus 510 configured to obtain subtitle data corresponding to the video-audio data, and send the subtitle data to the live broadcast server; the subtitle obtaining apparatus 510 comprises: a subtitle data corrector configured to correct the obtained subtitle data corresponding to the video-audio data.

A live broadcast service apparatus 520 configured to buffer the encoded video-audio data according to a preset delay time, form a subtitle layer according to the subtitle data and buffer the subtitle layer, establish a synchronously matching relationship between the subtitle layer and the video-audio data, and send the subtitle layer and the video-audio data.

The live broadcast service apparatus 520 comprises:
A data information processor configured to form a play time axis for the buffered video-audio data according to its play time point marker; and is configured to establish for the subtitle layer a subtitle time axis matching the play time axis of the video-audio data, or is configured to establish a start timestamp and an end timestamp for displaying the subtitle layer according to the play time axis.

A subtitle-layer corrector configured to correct the subtitle layer having the synchronously matching relationship, so as to form a new subtitle layer replacing the original subtitle layer; and is configured to adjust the subtitle time axis or the play time axis corresponding to the corrected content, or is configured to adjust the play time axis or the subtitle time axis corresponding to the corrected content, so that the new subtitle layer synchronously matches the video-audio data.

A mixing and encoding apparatus 530 configured to mix the received subtitle layer and video-audio data having a synchronously matching relationship so as to form streaming media information, transmit and send the streaming media information according to the predetermined transport protocol, and finally display the information on a terminal apparatus.

The mixing and encoding apparatus 530 comprises: a synthesizing processor configured to embed the subtitle time axis of the subtitle layer into the play time axis of the video-audio data, or is configured to embed the start timestamp and the end timestamp into the play time axis of the video-audio data; and is configured to synthesize the subtitle layer and the video-audio data.

Above are a method and a device provided by the present disclosure for instantly and synchronously displaying streaming media and subtitles; a processing method and a device for synchronously matching streaming media and subtitles; and a system for instantly and synchronously displaying streaming media and subtitles. Through the methods provided by the present disclosure, it is possible to synthesize the video-audio data and subtitle data as a whole file after establishing a synchronously matching relationship between the obtained video-audio data and the subtitle data, and to send the file to a display apparatus, thereby instantly and synchronously displaying the video-audio data and the subtitle data, and enhancing the synchronization precision of the video-audio data and the subtitle data.

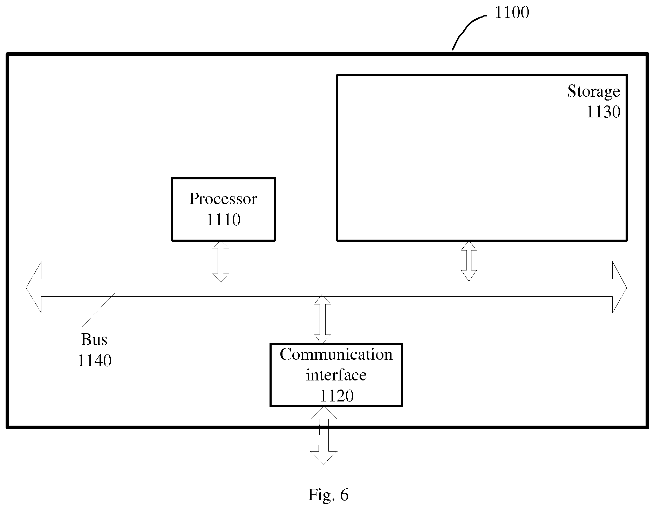

Fig. 6 shows a structural block diagram of the apparatus provided in another embodiment of the present disclosure for instantly and synchronously displaying streaming media and subtitles. The apparatus 1100 for instantly and synchronously displaying streaming media and subtitles can be a host server, a personal computer PC, or a portable computer or terminal and so on. There is no restriction in the embodiments of the present disclosure on the specific realization of compute nodes.

The apparatus 1100 for instantly and synchronously displaying streaming media and subtitles comprises: a processor 1110, a communication interface 1120, storage 1130, and a bus 1140, wherein intercommunications between the processor 1110, the communication interface 1120 and the storage is accomplished via the bus 1140.

The communication interface 1120 is configured to communicate with network equipment including, e.g., the virtual machine management center, the shared storage or the like.

The processor 1110 is configured to execute programs. The processor 1110 can be a CPU, or an ASIC (Application Specific Integrated Circuit), or can be configured to be one or more integrated circuits for implementing the embodiments of the present disclosure.

The storage 1130 is configured to store files. The storage 1130 may comprise a high-speed RAM storage, and may also comprise a non-volatile storage such as at least one disk storage. The storage 1130 may also be a storage array. The storage 1130 may also be blocked, and the blocks can be combined into a virtual volume according to certain rules.

In one possible mode of execution, the above program may be a program code including computer operation instructions. This program can be specifically used for realizing the operations in each step of the method for instantly and synchronously displaying streaming media and subtitles.

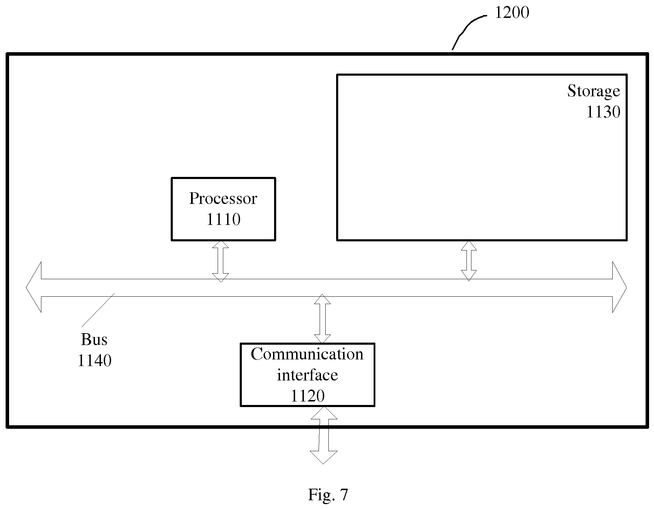

Fig. 7 shows a structural block diagram of the processing apparatus provided in another embodiment of the present disclosure for synchronously matching streaming media and subtitles. The processing apparatus 1200 for synchronously matching streaming media and subtitles can be a host server, a personal computer PC, or a portable computer or terminal and so on. There is no restriction in the embodiments of the present disclosure on the specific realization of compute nodes.

The processing apparatus 1200 for synchronously matching streaming media and subtitles comprises a processor 1110, a communication interface 1120, a storage 1130, and a bus 1140, wherein intercommunications between the processor 1110, the communication interface 1120 and the storage is accomplished via the bus 1140.

The communication interface 1120 is configured to communicate with network equipment including, e.g., the virtual machine management center, the shared storage or the like.

The processor 1110 is configured to execute programs. The processor 1110 can be a CPU, or an ASIC (Application Specific Integrated Circuit), or can be configured as one or more integrated circuits for implementing the embodiments of the present disclosure.

The storage 1130 is configured to store files. The storage 1130 may comprise a high-speed RAM storage, and may also comprise a non-volatile storage such as at least one disk storage. The storage 1130 may also be a storage array. The storage 1130 may also be segmented into blocks, and the blocks can be combined into virtual volumes according to certain rules.

In one possible mode of execution, the above program may be program codes including computer operation instructions. This program can be specifically used for carrying out the operations in each step of the processing method for synchronously matching streaming media and subtitles.

One skilled in the art can realize that all of the exemplary units and algorithm steps in the embodiments described in this disclosure can be realized via electronic hardware, or the combination of computer software with electronic hardware. Whether these functions are realized in the form of hardware or software depends on the particular application of the technical solution and design restrictions. One skilled in the art can realize the afore-mentioned functions by choosing different methods according to particular applications, but the realization should not be deemed as going beyond the scope of the present disclosure.

If the function is realized in the form of computer software, which is sold or used as an independent product, it can be regarded, to a certain extent, that the whole or a part (e.g., the part contributing over the prior art) of the technical solution of the present disclosure is reflected in the form of computer software. This computer software product is generally stored in a computer-readable non-volatile storage medium, and includes several instructions so that the computer equipment (which can be a personal computer, a server, or a network equipment and so on) can execute all or a part of the steps of the method in each embodiment of the present disclosure. The afore-mentioned storage medium includes all kinds of medium capable of storing program codes, such as USB disk, mobile hard disk, ROM (Read-Only Storage), RAM (Random Access Storage), magnetic disk, or optical disk and so on.

Afore-mentioned are merely specific embodiments of the present disclosure, but the protection scope of the present disclosure is not limited to these embodiments. Within the technical scope disclosed in the present disclosure, changes or replacement that may easily occur to any one skilled in the art should be included within the protection scope of the present disclosure. Therefore, the protection scope of the present disclosure should be subject to the protection scopes of the claims.

### Utility

Afore-mentioned are a method, a device, and a system for instantly and synchronously displaying and matching the streaming media and subtitles. Since delayed buffering can be performed for the video-audio data obtained from the live broadcasts or at the site of live events at home and abroad, and a synchronously matching relationship can be established between the video-audio data and the subtitle layer, the matching between the subtitles and the video-audio data can be effectively adjusted, the subtitle can be displayed on the video-audio pictures instantly and synchronously with the video-audio data, and can be synchronized with the video-audio; since a delay time of the video-audio is set, it is possible to correct the subtitle data and/or the subtitle layer so that the matching of the subtitles and the video-audio data is more accurate, mistakes in subtitles are less, thereby ensuring that the synchronous display of video-audio and the subtitles is precise and is free from geographical restrictions.

## Claims

1. A method for instantly and synchronously displaying streaming media and subtitles, comprising:
encoding collected video-audio data in a streaming media, and sending the encoded video-audio data to a live broadcast server;
obtaining subtitle data corresponding to the video-audio data, and sending the subtitle data to the live broadcast server;
buffering the encoded video-audio data by the live broadcast server according to a preset delay time, forming a subtitle layer according to the subtitle data and buffering the subtitle layer, establishing a synchronously matching relationship between the subtitle layer and the video-audio data, and sending the subtitle layer and the video-audio data; and
mixing the received subtitle layer and video-audio data having a synchronously matching relationship, forming streaming media information, and distributing the streaming media information to a network node for output.

2. The method according to claim 1 for instantly and synchronously displaying streaming media and subtitles, wherein the establishing the synchronously matching relationship between the subtitle layer and the video-audio data includes:
forming a play time axis for the buffered video-audio data according to a play time point marker of the video-audio data; and
establishing for the subtitle layer a subtitle time axis matching the play time axis of the video-audio data, or establishing a start timestamp and an end timestamp for displaying the subtitle layer according to the play time axis, wherein the start timestamp and the end timestamp for displaying the subtitle layer are collectively referred to as subtitle timestamps.

3. The method according to claim 2 for instantly and synchronously displaying streaming media and subtitles, wherein the mixing the received subtitle layer and video-audio data having a synchronously matching relationship includes:
embedding the subtitle time axis of the subtitle layer into the play time axis of the video-audio data, or embedding the start timestamp and the end timestamp into the play time axis of the video-audio data; and
synthesizing the subtitle layer with the video-audio data.

4. The method according to claim 2 for instantly and synchronously displaying streaming media and subtitles, wherein the establishing the synchronously matching relationship between the subtitle layer and the video-audio data includes:
correcting the subtitle layer having the synchronously matching relationship so as to form a new subtitle layer replacing the original subtitle layer; and
adjusting the play time axis or the subtitle time axis corresponding to the corrected content, or adjusting the subtitle timestamps corresponding to the corrected content, so that the new subtitle layer synchronously matches the video-audio data.

5. The method according to claim 4 for instantly and synchronously displaying streaming media and subtitles, wherein the correcting the subtitle layer includes: inserting a preset subtitle, skipping a subtitle, correcting a subtitle, or presenting a subtitle with one click.

6. The method according to claim 2 for instantly and synchronously displaying streaming media and subtitles, wherein the length of the play time axis is a sum of the time length of the video-audio data and the preset delay time.

7. The method according to claim 1 for instantly and synchronously displaying streaming media and subtitles, wherein the obtaining the subtitle data corresponding to the video-audio data and sending the subtitle data to the live broadcast server includes:
correcting the obtained subtitle data corresponding to the video-audio data.

8. The method according to claim 1 for instantly and synchronously displaying streaming media and subtitles, wherein the buffering the encoded video-audio data by the live broadcast server according to the preset delay time includes:
performing delayed buffering for each frame of the video-audio data, or performing delayed buffering for a start part of the video-audio data, or performing delayed buffering for an end part of the video-audio data, or delaying the video-audio data frame corresponding to a position for pre-modifying the subtitle or a position for pre-adjusting the video-audio data according to the position.

9. A device for instantly and synchronously displaying the streaming media and the subtitles, comprising:
a video-audio collecting and encoding unit configured to encode collected video-audio data in the streaming media and send the data to a live broadcast server;
a subtitle obtaining unit configured to obtain subtitle data of the video-audio data, form a subtitle layer, and send the subtitle layer to the live broadcast server;
a processing unit, the live broadcast server buffers the encoded video-audio data according to the preset delay time, buffer the subtitle layer, establish a synchronously matching relationship between the subtitle layer and the video-audio data, and send the subtitle layer and the video-audio data; and
a mixing and encoding unit configured to receive the subtitle layer and the video-audio data having a synchronously matching relationship, mix the subtitle layer and the video-audio data, and distribute the mixed subtitle layer and the video-audio data to a network node according to a predetermined transport protocol for output.

10. The device according to claim 9 for instantly and synchronously displaying the streaming media and the subtitles, wherein the processing unit comprises:
a play time axis forming unit configured to form a play time axis for the buffered video-audio data according to a play time point marker of the video-audio data; and
a subtitle time axis forming unit or a subtitle timestamp forming unit, wherein: the subtitle time axis forming unit is configured to establish for the subtitle layer a subtitle time axis matching the play time axis of the video-audio data; the subtitle timestamp forming unit is configured to establish a start timestamp and an end timestamp for displaying the subtitle layer according to the play time axis; wherein the start timestamp and the end timestamp for displaying the subtitle layer are collectively referred to as subtitle timestamps.

11. The device according to claim 10 for instantly and synchronously displaying the streaming media and the subtitles, wherein the mixing and encoding unit comprises:
a synthesizing and embedding unit configured to embed the subtitle time axis of the subtitle layer into the play time axis of the video-audio data, or configured to embed the start timestamp and the end timestamp into the play time axis of the video-audio data, and synthesize the subtitle layer with the video-audio data.

12. The device according to claim 10 for instantly and synchronously displaying the streaming media and the subtitles, wherein the processing unit comprises:
a subtitle-layer correcting unit configured to correct the subtitle layer having the synchronously matching relationship, so as to form a new subtitle layer replacing the original subtitle layer; and
an adjustment unit configured to adjust the play time axis or the subtitle time axis corresponding to the corrected content, or to adjust the subtitle timestamp corresponding to the corrected content, so that the new subtitle layer synchronously matches the video-audio data.

13. The device according to claim 12 for instantly and synchronously displaying the streaming media and the subtitles, wherein the subtitle-layer correcting unit is configured to perform the following for the subtitle layer, including: inserting a preset subtitle, skipping a subtitle, correcting a subtitle, or presenting a subtitle with one click.

14. The device according to claim 9 for instantly and synchronously displaying the streaming media and the subtitles, wherein the subtitle obtaining unit comprises: a subtitle data correcting unit configured to correct the obtained subtitle data corresponding to the video-audio data.

15. The device according to claim 9 for instantly and synchronously displaying the streaming media and the subtitles, wherein the processing unit comprises: a delayed-buffering unit configured to perform delayed buffering for each frame of the video-audio data, or perform delayed buffering for a start part of the video-audio data, or perform delayed buffering for an end part of the video-audio data, or delay the video-audio data frame corresponding to a position for pre-modifying the subtitle or a position for pre-adjusting the video-audio data according to the position.

16. A processing method for synchronously matching streaming media and subtitles, comprising:
buffering received encoded video-audio data according to a preset delay time;
forming a subtitle layer with received subtitle data corresponding to the video-audio data, and buffering the subtitle layer; and
establishing a synchronously matching relationship between the video-audio data and the subtitle layer, and sending the video-audio data and the subtitle layer.

17. The processing method according to claim 16 for synchronously matching streaming media and subtitles, wherein the establishing a synchronously matching relationship between the video-audio data and the subtitle layer comprises:
forming a play time axis for the buffered video-audio data according to a play time point marker of the video-audio data; and
establishing for the subtitle layer a subtitle time axis matching the play time axis of the video-audio data, or establishing a start timestamp and an end timestamp for displaying the subtitle layer according to the play time axis; wherein the start timestamp and the end timestamp for displaying the subtitle layer are collectively referred to as subtitle timestamps.

18. The processing method according to claim 17 for synchronously matching streaming media and subtitles, wherein the establishing a synchronously matching relationship between the subtitle layer and the video-audio data comprises:
correcting the subtitle layer having the synchronously matching relationship so as to form a new subtitle layer replacing the original subtitle layer; and
adjusting the play time axis or the subtitle time axis corresponding to the corrected content, or adjusting the subtitle timestamp corresponding to the corrected content, so that the new subtitle layer synchronously matches the video-audio data.

19. The processing method according to claim 16 for synchronously matching streaming media and subtitles, wherein the buffering the received encoded video-audio data according to the preset delay time includes:
performing delayed buffering for each frame of the video-audio data, or performing delayed buffering for a start part of the video-audio data, or performing delayed buffering for an end part of the video-audio data, or delaying the video-audio data frame corresponding to a position for pre-modifying the subtitle or a position for pre-adjusting the video-audio data according to the position.

20. A processing device for synchronously matching the streaming media and subtitles, comprising:
a delayed-buffering unit configured to buffer received encoded video-audio data according to a preset delay time;
a subtitle-layer forming unit configured to form a subtitle layer with received subtitle data corresponding to the video-audio data, and buffering the subtitle layer; and
a synchronously-matching relationship establishing unit configured to establish a synchronously matching relationship between the video-audio data and the subtitle layer, and send the video-audio data and the subtitle layer.

21. The processing device according to claim 20 for synchronously matching the streaming media and subtitles, wherein the synchronous-matching relationship establishing unit comprises:
a play time axis forming unit configured to form a play time axis for the buffered video-audio data according to a play time point marker of the video-audio data; and
a subtitle time axis forming unit or a subtitle timestamp establishing unit, wherein: the subtitle time axis forming unit is configured to establish for the subtitle layer a subtitle time axis matching the play time axis of the video-audio data; the subtitle timestamp establishing unit is configured to establish a start timestamp and an end timestamp for displaying the subtitle layer according to the play time axis; the start timestamp and the end timestamp for displaying the subtitle layer are collectively referred to as subtitle timestamps.

22. The processing device according to claim 21 for synchronously matching the streaming media and subtitles, wherein the synchronously-matching relationship establishing unit comprises:
a subtitle-layer correcting unit configured to correct the subtitle layer having the synchronously matching relationship, so as to form a new subtitle layer replacing the original subtitle layer; and
an adjustment unit configured to adjust the play time axis or the subtitle time axis corresponding to the corrected content, or to adjust the subtitle timestamp corresponding to the corrected content, so that the new subtitle layer synchronously matches the video-audio data.

23. The processing device according to claim 20 for synchronously matching the streaming media and subtitles, wherein the delayed-buffering unit is configured to perform delayed buffering for each frame of the video-audio data, or perform delayed buffering for a start part of the video-audio data, or perform delayed buffering for an end part of the video-audio data, or delay the video-audio frame corresponding to a position for pre-modifying the subtitle or a position for pre-adjusting the video-audio data according to the position.

24. A system for instantly and synchronously displaying streaming media and subtitles, comprising:
a collecting and encoding apparatus configured to encode collected video-audio data in a streaming media, and send the encoded video-audio data to a live broadcast server according to a pre-determined video-audio transport protocol;
a subtitle obtaining apparatus configured to obtain subtitle data corresponding to the video-audio data, and send the subtitle data to the live broadcast server according to a predetermined subtitle transport protocol;
a live broadcast service apparatus configured to buffer the encoded video-audio data according to a preset delay time, form a subtitle layer according to the subtitle data and buffer the subtitle layer, establish a synchronously matching relationship between the subtitle layer and the video-audio data, and send the subtitle layer and the video-audio data; and
a mixing and encoding apparatus configured to mix the received subtitle layer and video-audio data having a synchronously matching relationship so as to form streaming media information, and distribute the streaming media information to a network node according to the predetermined transport protocol for output.

25. The system according to claim 24 for instantly and synchronously displaying the streaming media and subtitles, wherein the live broadcast service apparatus comprises a data information processor configured to form a play time axis for the buffered video-audio data according to a play time point marker of the video-audio data; and configured to establish for the subtitle layer a subtitle time axis matching the play time axis of the video-audio data, or configured to establish a start timestamp and an end timestamp for displaying the subtitle layer according to the play time axis.

26. The system according to claim 25 for instantly and synchronously displaying the streaming media and subtitles, wherein the mixing and encoding apparatus comprises:
a synthesizing processor configured to embed the subtitle time axis of the subtitle layer into the play time axis of the video-audio data, or embed the start timestamp and the end timestamp into the play time axis of the video-audio data; and configured to synthesize the subtitle layer with the video-audio data.

27. The system according to claim 25 for instantly and synchronously displaying the streaming media and subtitles, wherein the live broadcast service apparatus comprises:
a subtitle-layer corrector configured to correct the subtitle layer having the synchronously matching relationship, so as to form a new subtitle layer replacing the original subtitle layer; and configured to adjust the subtitle time axis or the play time axis corresponding to the corrected content, or to adjust the play time axis or the subtitle time axis corresponding to the corrected content, so that the new subtitle layer synchronously matches the video-audio data.

28. The system according to claim 25 for instantly and synchronously displaying the streaming media and subtitles, wherein the subtitle obtaining apparatus comprises: a subtitle data corrector configured to correct the obtained subtitle data corresponding to the video-audio data.
